# EUROPEAN PATENT SPECIFICATION

(11) **EP 1 493 560 B1**
(45) Date of publication and mention of the grant of the patent: **17.10.2007**
(21) Application number: 04015651.5
(22) Date of filing: 02.07.2004
(51) Int. Cl.: B32B 27/32, B32B 27/20, B32B 7/10, G09F 3/02

(54) **Biaxially oriented multi-layer polypropylene film and the use thereof**
Biaxial orientierter mehrschichtiger Polypropylenfilm und dessen Verwendung
Film multicouche orienté biaxialement en polypropylène et son utilisation

(30) Priority: 04.07.2003 JP 2003191625; 04.07.2003 JP 2003191626
(43) Date of publication of application: 05.01.2005
(73) Proprietor: Tohcello Co., Ltd., Tokyo (JP)
(72) Inventor: Nemoto, Kaoru, Sashima-gun, Ibaraki (JP); Honda, Hiroshi, Sashima-gun, Ibaraki (JP)
(74) Representative: HOFFMANN EITLE

(56) References cited:
- EP-A- 0 347 329
- GB-A- 905 069
- US-A- 5 326 625
- US-A- 5 876 857

## Description

### FIELD OF THE INVENTION

The present invention relates to a biaxially oriented multi-layer polypropylene film having excellent opacifying property and surface gloss, and having micro voids inside thereof, which film is suitable for packaging films as well as for various uses including label base materials.

### BACKGROUND OF THE INVENTION

Biaxially oriented polypropylene films (hereinafter, occasionally referred to as OPP films) are used in various fields as well as packaging materials with making use of their excellent transparency, mechanical strength and rigidity. Further, various biaxially oriented films are proposed, for example, a biaxially oriented film obtainable in such a manner that an incompatibility material, for example, an organic material such as nylon, polyester or the like or an inorganic material such as glass bead or the like is added to a base material of polypropylene for improving the opacifying property and imparting the surface gloss of OPP films, and having a polypropylene layer free from additives as a surface layer (disclosed in JP-B-3(1991)-24334, Claims, the 10th column, Example 1), a biaxially oriented film having a surface layer of a surface gloss value of 80% or higher on at least one surface of a biaxially oriented film base material containing an inorganic fine powder such as calcium carbonate or the like (disclosed in JP-A-2000-127303, Claim 1), etc.

However, when such inorganic fillers are added, thickness unevenness is induced in OPP films in accordance with stretching conditions and thereby good films are not prepared occasionally. Furthermore, the resulting OPP films sometimes have inferior opacifying property, and thereby occasionally, good films are not prepared.

US 5,326,625 relates to a sealable, opaque, biaxially orientated multilayer polypropylene film comprising a core layer and (an) intermediate layer(s) located on one or both sides of the core layer and (a) top layer(s) located on one or both sides of the intermediate layer (s) or the core layer, wherein the core layer contains a polypropylene polymer or a polypropylene mixture and calcium carbonate having an average particle diameter of 1 to 2 *µ*m.

US 5,876,857 relates to a coextruded, biaxially orientated film comprising a base layer, which comprises a polypropylene or a polypropylene mixture, and at least one top layer comprising olefinic polymers. The top layer comprises a combination of inorganic and/or organic particles and a specific tertiary aliphatic amine.

GB 905,069 relates to polymer compositions comprising low-pressure polyolefins and the production of shaped articles therefrom, making specific reference to polyethylene. The polymers described therein may contain a fatty acid-coated calcium carbonate.

### OBJECT OF THE INVENTION

It is an object of the present invention to provide a biaxially oriented multi-layer propylene film having excellent opacifying property and surface gloss, and micro voids inside thereof.

More particularly, the present invention provides a biaxially oriented multi-layer propylene film having excellent opacifying property, surface gloss and low-temperature heat-sealing properties, and micro voids inside thereof, which film is suitable for packaging films or the like.

### SUMMARY OF THE INVENTION

The biaxially oriented multi-layer polypropylene film of the present invention comprises:
a biaxially oriented film base material layer obtainable from a propylene polymer composition, which comprises
70-95 % by weight of a propylene polymer (A),
3-15 % by weight of a calcium carbonate (B) having an average particle diameter of from 1 to 5 µm, which particle surface is surface-treated with a higher fatty acid, and
2-15 % by weight of a titanium oxide (C);
a coating layer comprising the propylene polymer (A) laminated on one surface of the base material layer; and
a coating layer comprising the propylene polymer (A) or a heat sealable layer comprising a propylene/α-olefin random copolymer (D), laminated on the other surface of the base material layer.

That is to say, the biaxially oriented multi-layer polypropylene film of the present invention comprises:
a biaxially oriented film base material layer obtainable from a propylene polymer composition, which comprises
70-95 % by weight of a propylene polymer (A),
3-15 % by weight of a calcium carbonate (B) having an average particle diameter of from 1 to 5 µm, which particle surface is surface-treated with a higher fatty acid, and
2-15 % by weight of a titanium oxide(C); and
a coating layer comprising the propylene polymer (A) laminated on both surfaces of the biaxially oriented film base material layer,
or
a biaxially oriented film base material layer obtainable from a propylene polymer composition, which comprises
70-95 % by weight of a propylene polymer (A),
3-15 % by weight of a calcium carbonate (B) having an average particle diameter of from 1 to 5µm, which particle surface is surface-treated with a higher fatty acid, and
2-15 % by weight of a titanium oxide(C);
a coating layer comprising the propylene polymer (A) laminated on one surface of the biaxially oriented film base material layer; and
a heat sealable layer comprising a propylene/α-olefin random copolymer (D), laminated on the other surface of the base material layer.

The label base material of the present invention comprises the biaxially oriented multi-layer polypropylene film.

### DETAILED DESCRIPTION OF THE INVENTION

The biaxially oriented multi-layer polypropylene film according to the present invention will be described in detail hereinafter.

### Propylene polymer (A)

The propylene polymer (A) used in the present invention is a polyolefin resin which is generally produced and sold under the name of polypropylene, and is a propylene homopolymer or a random copolymer which comprises propylene and a small amount of others, for example, not more than 5 mol% of α-olefin such as ethylene, 1-butene and 1-hexene, which homopolymer and copolymer have a density usually of from 0.890 to 0.930 g/cm³, an MFR, as determined in ASTM D 1238 under a load of 2160 g at a temperature of 230°C, of from 0.5 to 60 g/10 min, preferably 0.5 to 10 g/10 min, more preferably 1 to 5 g/10 min. The propylene polymer (A), further, may be a composition of one kind or two or more kinds of polymers, for example, a composition of propylene homopolymers having a different molecular weight and a composition of a propylene homopolymer and a propylene/α-olefin random copolymer.

Among them, a propylene homopolymer or a propylene random copolymer containing not more than 1 mol% of α-olefin both which polymers have a high isotacticity is preferred because a biaxially oriented multi-layer polypropylene film having high rigidity can be prepared.

The propylene polymer (A) used in the present invention is a raw material for a biaxially oriented film base material layer and a coating layer in the biaxially oriented multi-layer polypropylene film of the present invention.

In using the propylene polymer (A) of the present invention for preparing the base material layer or the coating layer of the biaxially oriented multi-layer polypropylene film of the present invention, various additives used in usual polyolefins, such as a heat stabilizer, weathering stabilizer, ultraviolet absorber, lubricant, slip agent, nucleating agent, anti-blocking agent, antistatic agent, anti-fogging agent, pigment and dye can be added without deteriorating the object of invention.

Examples of the heat stabilizer (antioxidant) may include phenol antioxidants such as
3,5-di-t-butyl-4-hydroxy toluene, tetrakis[methylene(3,5-di-t-butyl-4-hydroxy)hydrocinnamate] methane, n-octadecyl-3-(4'-hydroxy-3,5-di-t-butylphenyl) propionate and 2, 2'-methylene bis (4-methyl-6-t-butyl phenol) ;
benzophenone antioxidants such as 2-hydroxy-4-methoxy benzophenone, 2-hydroxy-4-octoxy benzophenone, and 2,4-dihydroxy benzophenone;
benzotriazole antioxidants such as 2(2'-hydroxy-5-methylphenyl)benzotriazole and substituted benzotriazole; and
2-ethylhexyl-2-cyano-3,3-diphenylacrylate, ethyl-2-cyano-3,3-diphenylacrylate, phenylsalicylate and 4-t-butylphenyl salicylate.

Examples of the antistatic agent may include alkylamine and a derivative thereof, higher alcohol, glycerin esters of higher fatty acid, pyridine derivative, sulfated oil, soaps, salts of olefin sulfate ester, alkylsulfate esters, aliphatic acid ethyl ester sulfonate, alkyl sulfonate, alkyl naphthalene sulfonate, alkyl benzene sulfonate, naphthalene sulfonate, succinate sulfonate, salts of phosphate, partial fatty acid esters of polyhydric alcohol, ethylene oxide adducts of fatty alcohol, ethylene oxide adducts of fatty acid, ethylene oxide adducts of fatty amine or fatty acid amide, ethylene oxide adducts of alkylphenol, ethylene oxide adducts of alkyl naphthol, ethylene oxide adducts of partial fatty acid ester of polyhydric alcohol and polyethylene glycol.

Examples of the lubricant may include stearic acid, stearic acid amide, oleic acid amide, higher alcohol and liquid paraffin.

Examples of the ultraviolet absorber may include ethylene-2-cyano-3,3'-diphenyl acrylate, 2-(2'-hydroxy-5'-methylphenyl)benzotriazole, 2-(2'-hydroxy-3'-t-butyl-5'-methylphenyl)-5-chlorobenzotriazole, 2-hydroxy-4-methoxy benzophenone, 2,2'-dihydroxy-4-methoxy benzophenone and 2-hydroxy-4-octoxy benzophenone.

In the case of using the propylene polymer (A) to the coating layer of the biaxially oriented multi-layer polypropylene film of the present invention, a biaxially oriented multi-layer polypropylene film having blocking resistance can be prepared by adding the anti-blocking agent in an amount of from 0.01 to 3.0 % by weight, preferably 0.05 to 1.0 % by weight. When the amount of the anti-blocking agent is less than 0.01 % by weight, the resultant biaxially oriented multi-layer polypropylene film has an insufficient blocking resistance effect, on the other hand, when the amount is over 3.0 % by weight, the resultant biaxially oriented multi-layer polypropylene film is liable to have a whitening surface and also be deteriorated in surface gloss. Examples of the anti-blocking agent used herein may include various known ones, namely, inorganic particulate compounds such as silica, talc, mica, zeolite and metal oxide prepared by sintering metal alkoxide; and organic compound resins such as polymethyl (meth)acrylate, melamine formalin resin, melamine urea resin and polyester resins. Of these, silica and polymethyl methacrylate are preferred from the viewpoint of anti-blocking properties.

### Calcium carbonate (B)

The calcium carbonate (B) used in the present invention has a particle surface subjected to surface treatment with a higher fatty acid, preferably a higher fatty acid of 10 to 28 carbon atoms and has an average particle diameter of from 1 to 5 µm, preferably 1.5 to 4 µm. The surface treatment with the higher fatty acid for the particle surface prevents occurrence of foreign matters, fish eye or the like induced by secondary aggregation of calcium carbonate and thereby a biaxially oriented multi-layer polypropylene film having good appearance can be prepared.

Examples of the higher fatty acid may include saturated higher fatty acids [CH₃(CH2)ₙCOOH, n=8 to 26] such as decanoic acid, undecanoic acid, lauric acid, tridecylic acid, myristic acid, pentadecylic acid, palmitic acid, heptadecylic acid, stearic acid, nonadecanoic acid, arachic acid, behenic acid, lignoceric acid, cerotic acid and heptacosanoic acid; and unsaturated higher fatty acids such as oleic acid, (cis), elaidic acid (trans), cetoleic acid, erucic acid, (cis), brassidic acid (trans), linolic acid, linolenic acid and arachidonic acid. Of these, saturated higher fatty acids, particularly stearic acid are preferred.

The calcium carbonate used in the present invention has a maximum particle diameter of preferably not more than 10 µm, more preferably not more than 9 µm.

The particle diameter was determined by a light transmission measuring method with centrifugal sedimentation using an ultra centrifugal automatic particle-size distribution measuring apparatus (Model CAPA-700, manufactured by Horiba, Ltd.).

The calcium carbonate (B) used in the present invention, further, has a particle size distribution such that the calcium carbonate particles having a particle diameter of not more than 5 µm are contained in an amount of not less than 80 % by weight, preferably not less than 85 % by weight based on all of the calcium carbonate particles. Using the calcium carbonate having such a particle size distribution and average particle diameter, voids formed by the calcium carbonate particles have uniform sizes so that films having excellent whiteness and free from unevenness are prepared.

Further, in order to prepare uniform films having excellent whiteness, the calcium carbonate (B) used in the present invention preferably has a moisture content of not more than 0.5 % by weight. The moisture content is determined in accordance with JIS K 5101. When the calcium carbonate (B) having a moisture content of more than 0.5 % by weight is used, the resultant biaxially oriented film base material layer of the biaxially oriented multi-layer polypropylene film is liable to generate foams. Furthermore, the calcium carbonate preferably has whiteness of not less than 90%.

### Titanium Oxide (C)

The titanium oxide (C) used in the present invention has an average particle diameter of from 0.1 to 0.5 µm, preferably 0.2 to 0.3 µm. The titanium oxide is also called as titanium white and classified into rutile type and anatase type. The rutile titanium oxide is preferred because of having high opacifying property. In the titanium oxide (C) used in the present invention, the surface is preferably alumina-treated. Furthermore, the titanium oxide preferably has whiteness of not less than 95 %. Using the surface-treated titanium oxide, the appearance of the resultant biaxially oriented multi-layer polypropylene film is improved.

In the present invention, the particle diameter of the titanium oxide is measured in a light scattering method.

### Propylene/α-olefin random copolymer (D)

The propylene/α-olefin random copolymer (D) used in the present invention is a random copolymer of propylene and an α-olefin and has a melting point of preferably from 80 to 155°C, more preferably 90 to 145°C. When the melting point is over 155°C, the low-temperature heat-sealing properties of the resultant biaxially oriented multi-layer polypropylene film is liable not to be improved, on the other hand, when it is less than 80°C, the resultant biaxially oriented multi-layer polypropylene film has occurrence of tackiness and is liable to have blocking. The propylene/α-olefin random copolymer (D) has an α-olefin content of usually from 1 to 40 mol%, preferably 2 to 35 mol%.

When the α-olefin content is in the above range, the resultant biaxially oriented multi-layer polypropylene film has excellent balance in low-temperature heat-sealing properties and blocking resistance.

Examples of the α-olefin used for copolymerization with propylene may include ethylene, 1-butene, 1-hexene, 4-methyl-1-pentene and 1-octene. Specific examples of the copolymer are a propylene/ethylene random copolymer, propylene/1-butene random copolymer and propylene/ethylene/1-butene random copolymer. These copolymers may be used singly or in combination with two or more.

The propylene/α-olefin random copolymer (D) is used for a material of the heat sealable layer of the biaxially oriented multi-layer polypropylene film according to the present invention.

When the propylene/α-olefin random copolymer (D) according to the present invention is used for forming the heat sealable layer of the biaxially oriented multi-layer polypropylene film, various additives as described above which are usually used for polyolefins, for example, a heat stabilizer, weathering stabilizer, ultraviolet absorber, lubricant, slip agent, nucleating agent, anti-blocking agent, antistatic agent, anti-fogging agent, pigment and dye as well as a 1-butene/α-olefin random copolymer (E) as described later or other olefin random copolymers including a low crystalline propylene/1-butene random copolymer and ethylene/1-butene random copolymer can be added without deteriorating the object of invention.

### 1-Butene/α-olefin random copolymer (E)

The 1-butene/α-olefin random copolymer (E) used in the present invention is a random copolymer of 1-butene and an α-olefin having 2 to 10 carbon atoms such as propylene, ethylene, 1-hexene, 4-methyl-1-pentene and 1-octene, which copolymer has a 1-butene content of preferably from 60 to 99 mol%, more preferably 65 to 96 mol%, a melting point (Tm), as determined based on DSC, of preferably from 40 to 130°C, more preferably 60 to 120°C, an intrinsic viscosity [η], as measured in decalin at 135°C, of preferably from 0.5 to 6 dl/g, more preferably 1 to 5 dl/g and a crystallinity, as measured by a X-ray diffractometry, of preferably from 5 to 60%, more preferably 10 to 58 %, and further the copolymer (E) is preferably 1-butene/propylene random copolymer. The 1-butene/α-olefin random copolymer (E) has an MFR (ASTM D-1238, under a load of 2160 g at a temperature of 190°C) of usually from 0.2 to 20 g/10 min, more preferably 1 to 20 g/10 min.

Adding the 1-butene/α-olefin random copolymer (E) in an amount of from 5 to 50 % by weight, preferably 10 to 40 % by weight, more preferably 10 to 30 % by weight to the propylene/α-olefin random copolymer (D), the low-temperature heat-sealing strength of the resultant biaxially oriented multi-layer polypropylene film can be enhanced, that is, heat seal starting temperature can be shifted to the lower temperature side.

When the amount of the 1-butene/a-olefin random copolymer (E) is less than 5 % by weight, the effect of further improving the low-temperature heat-sealing properties can not be appeared optionally, on the other hand, when the amount is over 50 % by weight, the resultant biaxially oriented multi-layer polypropylene film optionally has occurrence of tackiness and thereby is susceptible to blocking and further, in the film production, the film is adhered to a roll with the result that it is occasionally difficult to mold the film (the molding properties are inferior).

This 1-butene/α-olefin random copolymer (E) is a material of the heat sealable layer of the biaxially oriented multi-layer polypropylene film according to the present invention together with the above polypropylene/α-olefin random copolymer (D).

In the present invention, with regard to the propylene/α-olefin random copolymer (D) and the 1-butene/α-olefin random copolymer (E), the melting point (Tm) is measured in the following method.

About 5 mg of the propylene/α-olefin random copolymer (D) or the 1-butene/α-olefin random copolymer (E) is weighed, and heated at an elevating rate of 10°C/min to 200°C using a differential thermal scanning calorimeter (Type DSC2200 module, manufactured by Seiko Electronic Industries Co., Ltd) and kept for 5 min. Thereafter, the copolymer is cooled to 0°C at a cooling rate of 10°C/min, and again heated from 0°C to 200°C at an elevating rate of 10°C/min. At the time, the melting curve is measured and from the melting curve, the peak temperature is determined in accordance with a method of ASTM D-3419 and taken as a melting point (Tm).

### Propylene polymer composition

The propylene polymer composition of the present invention comprises the propylene polymer (A) in an amount of 70 to 95 % by weight, preferably 70 to 90 % by weight, the calcium carbonate (B) in an amount of 3 to 15 % by weight, preferably 5 to 15 % by weight, and the titanium oxide (C) in an amount of 2 to 15 % by weight, preferably 5 to 15 % by weight.

When the amount of the calcium carbonate (B) is less than 3 % by weight, the opacifying property of the resultant biaxially oriented multi-layer polypropylene film is liable not to be improved, on the other hand, when the amount is over 15 % by weight, the appearance of the biaxially oriented multi-layer polypropylene film is liable to be deteriorated.

When the amount of the titanium oxide (C) is less than 2 % by weight, the opacifying property of the resultant biaxially oriented multi-layer polypropylene film is liable not to be improved, on the other hand, when the amount is over 15 % by weight, the appearance of the resultant biaxially oriented multi-layer polypropylene film is liable to be deteriorated.

To the propylene polymer composition of the present invention, various additives, which are usually used for polyolefins, for example, a heat stabilizer, weathering stabilizer, ultraviolet absorber, lubricant, slip agent, nucleating agent, anti-blocking agent, antistatic agent, anti-fogging agent, pigment and dye can be added without deteriorating the object of invention in addition to the calcium carbonate (B) and the titanium oxide (C).

### Biaxially oriented multi-layer polypropylene film

The biaxially oriented multi-layer polypropylene film of the present invention is obtainable by laminating the coating layer comprising the propylene polymer (A) on both surfaces of the biaxially oriented film base material layer of the above propylene polymer composition, or is obtainable by laminating the coating layer comprising the propylene polymer (A) on one surface of the biaxially oriented film base material layer of the above propylene polymer composition and laminating the heat sealable layer comprising the propylene/α-olefin random copolymer (D) on the other surface of the base material layer.

The biaxially oriented multi-layer polypropylene film of the present invention is also obtainable by laminating the coating layer comprising the propylene polymer (A) on one surface of the biaxially oriented film base material layer of the above propylene polymer composition and laminating the heat sealable layer of a composition comprising the propylene/α-olefin random copolymer (D) and the 1-butene/α-olefin random copolymer (E) on the other surface of the base material layer.

When the biaxially oriented multi-layer propylene film of the present invention comprises the heat sealable layer, an anti-blocking agent is added in an amount of from 0.01 to 3.0 % by weight, preferably 0. 5 to 1.0 % by weight to the coating layer and/or the heat sealable layer so that the resultant film has excellent blocking resistance.

The thickness of the biaxially oriented multi-layer polypropylene film of the present invention is determined in accordance with various uses so that it is not particularly limited. Usually, the base material layer has a thickness of from 10 to 100 µm, preferably 15 to 50 µm, the coating layer has a thickness of from 0.5 to 15 µm, preferably 1 to 10 µm, and in the case of having a heat sealable layer, the heat sealable layer has a thickness of from 0.5 to 15 µm, preferably 1 to 10 µm.

In the case that it has the coating layer on both surfaces of the base material layer, each coating layer has the above thickness. Furthermore, in the case that it has the coating layer on both surfaces of the base material layer, the thicknesses of the coating layers may be the same or different each other.

The biaxially oriented multi-layer polypropylene film of the present invention may be subjected to surface treatment on one surface or both surfaces thereof with corona treatment or flame treatment in accordance with necessity.

Additionally, in accordance with the uses of the biaxially oriented multi-layer polypropylene film of the present invention, for imparting the heat-sealing properties, a high pressure low density polyethylene, linear low density polyethylene, a random copolymer of ethylene and an α-olefin of 3 to 10 carbon atoms (crystalline or low crystalline), a random copolymer of propylene and ethylene or an α-olefin of at least 4 carbon atoms (crystalline or low crystalline), a polymer having a low melting point such as polybutene or ethylene/vinyl acetate copolymer, or a composition thereof may be laminated on the coating layer or the heat sealable layer. For imparting the gas barrier properties, an ethylene/vinyl alcohol copolymer, polyamide, polyester or vinylidene chloride polymer may be laminated with extrusion coating etc, or a metal, an oxide thereof, or silica may be deposited with vapor deposition. For increasing the adhesiveness with other substances, the surface of the oriented film may be subjected to anchor treatment with an adhesive such as imine or urethane, or maleic anhydride modified polyolefin may be laminated.

The biaxially oriented multi-layer polypropylene film of the present invention can be prepared by, for example, co-extruding the propylene polymer composition as the base material layer and the propylene polymer (A) as the coating layer to prepare a multi-layer sheet and then treating the sheet according to known methods for preparing biaxially oriented film such as the simultaneous biaxial orientation method or the successive biaxial orientation method.

The biaxially oriented multi-layer polypropylene film of the present invention, further, can be prepared by, for example, co-extruding the propylene polymer composition as the base material layer and the propylene polymer (A) as the coating layer, and the propylene/α-olefin random copolymer (D) prepared optionally by adding the 1-butene/α-olefin random copolymer (E), to prepare a multi-layer sheet and then treating the sheet according to known methods for preparing biaxially oriented film such as the simultaneous biaxial orientation method or the successive biaxial orientation method.

The biaxially orientation can be carried out in conditions for preparing known biaxially orientated polypropylene films. For example, the successive biaxial orientation method is carried out in such conditions that the longitudinal (machine direction) orientation temperature is from 100 to 145°C and the longitudinal orientation magnification (stretch ratio to machine direction) is from 4 to 7 times, and the lateral (transverse direction) orientation temperature is from 150 to 190°C and the lateral orientation magnification (stretch ratio to transverse direction) is from 8 to 11 times.

The biaxial oriented multi-layer polypropylene film of the present invention has excellent opacifying property, surface gloss and cushioning property etc. so that it is also suitable for label base materials or transfer base materials for printing.

### EFFECT OF THE INVENTION

The biaxial oriented multi-layer polypropylene film of the present invention has excellent opacifying property and cushioning property because of having micro voids inside thereof, and has excellent surface gloss because of having the coating layer prepared from the propylene polymer (A). The biaxial oriented multi-layer polypropylene film, further, has excellent low-temperature heat-sealing properties because of having the heat sealable layer prepared from the propylene/α-olefin random copolymer (D) on the other surface of the base material layer.

In the present invention, making use of the properties, the biaxially oriented multi-layer polypropylene film having the coating layer of the propylene polymer (A) on both surfaces of the base material layer and the biaxially oriented multi-layer polypropylene film having the coating layer of the propylene polymer (A) on one surface of the base material layer and having the heat sealable layer on the other surface thereof can be used, without saying, for various packaging materials including alternative materials for wrapping papers such as packages for steamed hand towel, label or materials for packaging confectionary such as snack, ice cream and the like as well as for various industrial uses including transfer base materials.

### EXAMPLE

The present invention is described in more detail with reference to as the following non-limiting examples.

### Methods of Evaluation

1) Opacifying property [%/sheet]: The opacifying property of the biaxially oriented multi-layer polypropylene film was determined in such a manner that one sheet of film was subjected to a test of JIS K 7105 using a Haze Meter (manufactured by Nippon Denshoku Industries Co., Ltd NDH-300A) and the light transmittance was measured.
2) Surface gloss [%/sheet]: The surface gloss of the coating layer of the biaxially oriented multi-layer polypropylene film was measured using a Haze Meter (manufactured by Nippon Denshoku Industries Co., Ltd. VGS-1D-300A) at an angle of incidence of 60° in accordance with JIS K 7105.
3) Heat-sealing strength [N/15 mm]: The heat sealable layer surfaces of the biaxially oriented multi-layer polypropylene films were put face to face, and heat sealed using a heat seal tester with a seal bar having a width of 5 mm (manufactured by Toyo Seiki Seisaku-sho, Ltd.) at a temperature as shown in Table at a pressure of 0.1 MPa for 0.5 sec followed by standing for cooling at room temperature. The layers were cut out into a sample having a width of 15 mm. Using a tensile tester (manufactured by Toyo Seiki Seisaku-sho, Ltd.), the peeling strength of the heat sealed portion of the sample was measured at a tensile rate of 300 mm/min and was taken as heat-sealing strength.
4) Density [g/cm³]: With regard to the biaxially oriented multi-layer polypropylene film, the thickness and the film weight per 1 m² were measured and then, the density was calculated.
5) Evaluation of Film appearance: The film appearance was evaluated by visual observation.

A: The appearance of the biaxially oriented multi-layer polypropylene film molded has no problem, namely, has fine appearance.
B: The appearance of the biaxially oriented multi-layer polypropylene film molded has problems such that many secondary agglomerates of calcium carbonate and unevenness are generated.

### Example 1

### Base material layer: Propylene polymer composition layer

A composition was prepared by adding 1000 ppm of tetrakis[methylene-3-(3',5'-di-t-butyl-4'-hydroxyphenyl) propionate]methane (Ciba-Geigy Japan Ltd. Trade Name Irganox 1010) as a heat stabilizer and 1000 ppm of calcium stearate (manufactured by NOF Corporation) to a polypropylene homopolymer (PP-1) having a melting point of 162°C and MFR of 2.0 g/10 min.

Further, a composition was prepared by kneading a propylene homopolymer with a stearic acid-coated calcium carbonate powder having an average particle diameter of 1.9 µm, a maximum particle diameter of 8 µm, a content of particles having a particle diameter of not more than 5 µm of 94 % by weight and a moisture content of not more than 400 ppm, as measured at 200°C in the Karl Fischer's method.

Furthermore, a composition prepared by kneading a propylene homopolymer with an alumina treated rutile titanium oxide having an average particle diameter of 0.23 µm, and a moisture content of not more than 400 ppm, as measured at 200°C in the Karl Fischer's method.

The compositions thus prepared were dry blended to prepare a propylene polymer composition (1) containing 87 % by weight of the propylene homopolymer, 6 % by weight of calcium carbonate and 7 % by weight of titanium oxide.

### Coating layer: Propylene polymer layer

To a propylene homopolymer (PP-2) having a melting point of 162°C and MFR of 2.4 g/10 min, 0.10 % by weight of polymethyl methacrylate particles as an anti-blocking agent and 1000 ppm of tetrakis[methylene-3-(3',5'-di-t-butyl-4'-hydroxyphenyl)propionate]methane (manufactured by Ciba-Geigy Japan Ltd. Trade Name Irganox 1010) as a heat stabilizer were added to prepare a propylene polymer composition (2).

### Preparation of Biaxially oriented multi-layer polypropylene film

The propylene polymer composition (2), the propylene polymer composition (1) and the propylene polymer composition (2) were melt extruded in an extrusion amount ratio of 1/10/1 using each screw extruder with a multi-manifold type T-die and then rapidly cooled on a cooling roll, to prepare a multi-layer sheet having a thickness of 1.5 mm.

This sheet was heated at 120°C and stretched 5 times in a sheet feeding direction (longitudinal direction). The 5 time stretched sheet was heated at 160°C and stretched 10 times in a direction perpendicular to the sheet feeding direction (lateral direction) to prepare a biaxially oriented multi-layer polypropylene film having a base material layer thickness of 25 µm, a thickness of both of the coating layers of 2.5 µm (total thickness: 30 µm).

The coating layer of the resultant biaxially oriented multi-layer polypropylene film was subjected to corona treatment.

The physical properties of the biaxially oriented multi-layer polypropylene film were measured by the above-described methods. The results are shown in Table 1.

### Comparative Example 1

The procedure of Example 1 was repeated except that in place of the propylene polymer composition (1) used in the formation of the base material layer, a propylene polymer composition (3) containing 91.8 % by weight of a propylene homopolymer, 1.2 % by weight of calcium carbonate and 7 % by weight of titanium oxide was used, and thereby a biaxially oriented multi-layer polypropylene film was prepared.

The evaluation results are shown in Table 1.

### Comparative Example 2

The procedure of Example 1 was repeated except that in place of the propylene polymer composition (1) used in the formation of the base material layer, a propylene polymer composition (4) containing 93 % by weight of a propylene homopolymer and 7 % by weight of titanium oxide was used, and thereby a biaxially oriented multi-layer polypropylene film was prepared.

The evaluation results are shown in Table 1.

### Comparative Example 3

The procedure of Example 1 was repeated except that in place of the propylene polymer composition (1) used in the formation of the base material layer, a propylene polymer composition (5) containing 94% by weight of a propylene homopolymer and 6 % by weight of calcium carbonate was used, and thereby a biaxially oriented multi-layer polypropylene film was prepared.

The evaluation results are shown in Table 1.

### Comparative Example 4

The procedure of Example 1 was repeated except that in place of the calcium carbonate having an average particle diameter of 1.9 µm contained in the propylene composition (1) used in the formation of the base material layer, calcium carbonate having an average particle diameter of 0. 8 µm was used, and thereby a biaxially oriented multi-layer polypropylene film was prepared.

The evaluation results are shown in Table 1.

**Table 1**

| | | Example | Comparative Example | | | |
|---|---|---|---|---|---|---|
| | | 1 | 1 | 2 | 3 | 4 |
| Coating layer | PP-1 (% by weight) | 100 | 100 | 100 | 100 | 100 |
| Base material layer | PP-2 (% by weight) | 87 | 91.8 | 93 | 94 | 87 |
| | Calcium carbonate (% by weight) | 6 | 1.2 | 0 | 6 | 6 |
| | Titanium oxide (% by weight) | 7 | 7 | 7 | 0 | 7 |
| Coating layer | PP-1 (% by weight) | 100 | 100 | 100 | 100 | 100 |
| Opacifying property | Light transmittance (%) | 16.7 | 19.4 | 35.1 | 25.7 | 17.8 |
| Surface gloss | (%) | 121 | 88 | 81 | 137 | 107 |
| Density | (g/cm³) | 0.68 | 0.82 | 0.87 | 0.65 | 0.75 |
| Film appearance | Visual observation | A | A | A | A | B |

### Example 2

### Base material layer: Propylene polymer composition layer

A composition was prepared by adding 1000 ppm of tetrakis[methylene-3-(3',5'-di-t-butyl-4'-hydroxyphenyl) propionate]methane (manufactured by Ciba-Geigy Japan Ltd. Trade Name Irganox 1010) as a heat stabilizer and 1000 ppm of calcium stearate (manufactured by NOF Corporation) to a polypropylene homopolymer (PP-1) having a melting point of 162°C and MFR of 2.0 g/10 min.

Further, a composition was prepared by kneading a propylene homopolymer with a stearic acid-coated calcium carbonate powder having an average particle diameter of 1. 9 µm, a maximum particle diameter of 8 µm, a content of particles having a particle diameter of not more than 5 µm of 94 % by weight and a moisture content of not more than 400 ppm, as measured at 200°C in the Karl Fischer's method.

Furthermore, a composition was prepared by kneading a propylene homopolymer with an alumina treated rutile titanium oxide having an average particle diameter of 0.23 µm, and a moisture content of not more than 400 ppm as measured at 200°C in the Karl Fischer's method.

The compositions thus prepared were dry blended to prepare a propylene polymer composition (1) containing 87 % by weight of the propylene homopolymer, 6 % by weight of calcium carbonate and 7 % by weight of titanium oxide.

### Heat sealable layer: Propylene copolymer composition

To a propylene/ethylene random copolymer (PEC) having an ethylene content of 2.2 % by weight, a melting point of 139.3°C and MFR of 7 g/10 min, 0.10 % by weight of polymethyl methacrylate particles as an anti-blocking agent and 1000 ppm of tetrakis[methylene-3-(3',5'-di-t-butyl-4'-hydroxyphenyl) propionate]methane (manufactured by Ciba-Geigy Japan Ltd. Trade Name Irganox 1010) as a heat stabilizer were added to prepare a propylene polymer composition (6).

### Coating layer: Propylene polymer layer

To a propylene homopolymer (PP-2) having a melting point of 162°C and MFR of 2. 4 g/10 min, 0.10 % by weight of polymethyl methacrylate particles as an anti-blocking agent and 1000 ppm of tetrakis[methylene-3-(3',5'-di-t-butyl-4'-hydroxyphenyl)propionate]methane (manufactured by Ciba-Geigy Japan Ltd. Trade Name Irganox 1010) as a heat stabilizer were added to prepare a propylene polymer composition (2).

### Preparation of Biaxially oriented multi-layer polypropylene film

The propylene polymer composition (6) as a heat sealable layer, the propylene polymer composition (1) as a base material layer and the propylene polymer composition (2) as a coating layer were prepared and melt extruded in an extrusion amount ratio of heat sealable layer/base material layer /coating layer of 1/10/1 using each screw extruder with a multi-manifold type T-die and rapidly cooled on a cooling roll, to prepare a multi-layer sheet having a thickness of 1.5 mm.

This sheet was heated at 120°C and stretched 5 times in a sheet feeding direction (longitudinal direction). The 5 time stretched sheet was heated at 160°C and stretched 10 times in a direction perpendicular to the sheet feeding direction (lateral direction) to prepare a biaxially oriented multi-layer polypropylene film having a base material layer thickness of 25 µm, a thickness of a heat sealable layer and a coating layers of 2.5 µm, respectively (total thickness: 30 µm).

The coating layer of the resultant biaxially oriented multi-layer polypropylene film was subjected to corona treatment.

The physical properties of the biaxially oriented multi-layer polypropylene film were measured by the above-described methods. The results are shown in Table 2.

### Example 3

The procedure of Example 2 was repeated except that in place of the propylene/ethylene random copolymer (PEC) contained in the propylene copolymer composition (6) used in the formation of the heat sealable layer, a propylene copolymer composition (7) containing 80 % by weight of PEC and 20 % by weight of 1-butene/propylene random copolymer (BPC) having a 1-butene content of 84 % by weight, a melting point of 74°C, MFR of 4.0 g/10 min (190°C) was used, and thereby a biaxially oriented multi-layer polypropylene film was prepared.

The evaluation results are shown in Table 2.

### Comparative Example 5

The procedure of Example 2 was repeated except that in place of the propylene polymer composition (1) used in the formation of the base material layer, a propylene polymer composition (3) containing 91.8 % by weight of a propylene homopolymer, 1.2 % by weight of calcium carbonate and 7 % by weight of titanium oxide was used, and thereby a biaxially oriented multi-layer polypropylene film was prepared.

The evaluation results are shown in Table 2.

### Comparative Example 6

The procedure of Example 2 was repeated except that in place of the propylene polymer composition (1) used in the formation of the base material layer, a propylene polymer composition (4) containing 93 % by weight of a propylene homopolymer and 7 % by weight of titanium oxide was used, and thereby a biaxially oriented multi-layer polypropylene film was prepared.

The evaluation results are shown in Table 2.

### Comparative Example 7

The procedure of Example 2 was repeated except that in place of the propylene polymer composition (1) used in the formation of the base material layer, a propylene polymer composition (5) containing 94 % by weight of a propylene homopolymer and 6 % by weight of calcium carbonate was used, and thereby a biaxially oriented multi-layer polypropylene film was prepared.

The evaluation results are shown in Table 2.

### Comparative Example 8

The procedure of Example 2 was repeated except that in place of the calcium carbonate having an average particle diameter of 1.9 µm contained in the propylene polymer composition (1) used in the formation of the base material layer, calcium carbonate having an average particle diameter of 0.8 µm was used, and thereby a biaxially oriented multi-layer polypropylene film was prepared.

The evaluation results are shown in Table 2.

**Table 2**

| | | Example | | Comparative Example | | | |
|---|---|---|---|---|---|---|---|
| | | 2 | 3 | 5 | 6 | 7 | 8 |
| Coating layer | PP-1 (% by weight) | 100 | 100 | 100 | 100 | 100 | 100 |
| Base material | PP-2 (%.by weight) | 87 | 87 | 91.8 | 93 | 94 | 87 |
| layer | Calcium carbonate (% by weight) | 6 | 6 | 1.2 | 0 | 6 | 6 |
| | Titanium oxide (% by weight) | 7 | 7 | 7 | 7 | 0 | 7 |
| Heat sealable layer | PEC (% by weight) | 100 | 80 | 100 | 100 | 100 | 100 |
| | PBC (% by weight) | 0 | 20 | 0 | 0 | 0 | 0 |
| Opacifying property | Light transmittance (%) | 16.8 | 16.7 | 20.5 | 38.1 | 28.2 | 19.1 |
| Surface gloss | (%) | 119 | 121 | 84 | 89 | 135 | 111 |
| Heat-sealing strength (N/15 mm) | Heat-sealing temperature (°C) | | | | | | |
| | 70 | 0.0 | 0.3 | - | - | - | - |
| | 80 | 0.0 | 0.7 | - | - | - | - |
| | 90 | 0.0 | 3.4 | - | - | - | - |
| | 100 | 0.0 | 3.3 | - | - | - | - |
| | 110 | 0.1 | 3.4 | - | - | - | - |
| | 120 | 0.3 | 3.2 | - | - | - | - |
| | 130 | 1.4 | 3.4 | - | - | - | - |
| | 140 | 2.9 | 3.3 | - | - | - | - |
| Density | (g/cm³) | 0.69 | 0.69 | 0.83 | 0.87 | 0.64 | 0.76 |
| Film appearance | Visual observation | A | A | A | A | A | B |

As is clear from Tables 1 and 2, the biaxially oriented multi-layer polypropylene film formed from the base material layer containing the prescribed amounts of calcium carbonate and titanium oxide (Examples 1, 2 and 3) had excellent opacifying property and also fine surface gloss and film appearance. On the other hand, any of the film in which the amount of calcium carbonate was decreased (Comparative Examples 1 and 5) and the film in which calcium carbonate or titanium oxide was not added (Comparative Examples 2,3,6 and 7) had inferior opacifying property, and the film prepared using calcium carbonate having a small average particle diameter (Comparative Examples 4 and 8) had inferior opacifying property and film appearance, therefore in any of Comparative Examples, good biaxially oriented multi-layer polypropylene films were not prepared.

## Claims

1. A biaxially oriented multi-layer polypropylene film comprising:
a biaxially oriented film base material layer obtainable from a propylene polymer composition, which comprises
70-95 % by weight of a propylene polymer (A),
3-15 % by weight of a calcium carbonate (B) having an average particle diameter of from 1 to 5 µm, which particle surface is surface-treated with a higher fatty acid, and
2-15 % by weight of a titanium oxide (C);
a coating layer comprising the propylene polymer (A) laminated on one surface of the base material layer; and
a coating layer comprising the propylene polymer (A) or a heat sealable layer comprising a propylene/α-olefin random copolymer (D), laminated on the other surface of the base material layer.

2. The biaxially oriented multi-layer polypropylene film according to claim 1 comprising:
a biaxially oriented film base material layer obtainable from a propylene polymer composition, which comprises
70-95 % by weight of a propylene polymer (A),
3-15 % by weight of a calcium carbonate (B) having an average particle diameter of from 1 to 5 µm, which particle surface is surface-treated with a higher fatty acid, and
2-15 % by weight of a titanium oxide (C); and
a coating layer comprising the propylene polymer (A) laminated on both surfaces of the base material layer.

3. The biaxially oriented multi-layer polypropylene film according to claim 1 comprising:
a biaxially oriented film base material layer obtainable from a propylene polymer composition, which comprises
70-95 % by weight of a propylene polymer (A),
3-15 % by weight of a calcium carbonate (B) having an average particle diameter of from 1 to 5 µm, which particle surface is surface-treated with a higher fatty acid, and
2-15 % by weight of a titanium oxide (C);
a coating layer comprising the propylene polymer (A) laminated on one surface of the base material layer; and
a heat sealable layer comprising a propylene/α-olefin random copolymer (D), laminated on the other surface of the base material layer.

4. The biaxially oriented multi-layer polypropylene film according to any one of claims 1 to 3 wherein the calcium carbonate (B) has a maximum particle diameter of not more than 10 µm, and a proportion of particles having a particle diameter of not more than 5 µm of not less than 80 % by weight.

5. The biaxially oriented multi-layer polypropylene film according to any one of claims 1 to 3 wherein the titanium oxide (C) is surface-treated with alumina.

6. The biaxially oriented multi-layer polypropylene film according to any one of claims 1 to 3 wherein the propylene polymer (A) is a propylene homopolymer.

7. The biaxially oriented multi-layer polypropylene film according to any one of claims 1 to 3 wherein the biaxially oriented film base material layer and the coating layer, or the biaxially oriented film base material layer, the coating layer and the heat sealable layer are molded with co-extrusion.

8. The biaxially oriented multi-layer polypropylene film according to any one of claims 1 to 3 wherein the propylene/α-olefin random copolymer (D) comprises a 1-butene/propylene random copolymer (E).

9. A label base material comprising the biaxially oriented multi-layer polypropylene film as claimed in any one of claims 1 to 8.

## Patentansprüche

1. Biaxial orientierte Multischicht-Polypropylenfolie, umfassend:
eine biaxial orientierte Foliengrundmaterialschicht, erhältlich aus einer Propylenpolymerzusammensetzung, die 70 bis 95 Gew.-% eines Propylenpolymers (A),
3 bis 15 Gew.-% Calciumcarbonat (B) mit einem mittleren Partikeldurchmesser von 1 bis 5 *µ*m, dessen Partikeloberfläche mit einer höheren Fettsäure oberflächenbehandelt ist, und
2 bis 15 Gew. - % Titanoxid (C) umfasst;
eine Beschichtungsschicht, die das Propylenpolymer (A) umfasst, laminiert auf eine Oberfläche der Grundmaterialschicht; und
eine Beschichtungsschicht, die das Propylenpolymer (A) oder eine Wärme-versiegelbare Schicht, die ein statistisches Propylen/α-Olefin-Copolymer (D) umfasst, laminiert auf die andere Oberfläche der Grundmaterialschicht.

2. Biaxial orientierte Multischicht-Polypropylenfolie gemäß Anspruch 1, umfassend:
eine biaxial orientierte Foliengrundmaterialschicht, erhältlich aus einer Propylenpolymerzusammensetzung, die 70 bis 95 Gew.-% eines Propylenpolymers (A),
3 bis 15 Gew.-% Calciumcarbonat (B) mit einer mittleren Partikelgröße von 1 bis 5 *µ*m, dessen Partikeloberfläche mit einer höheren Fettsäure oberflächenbehandelt ist, und
2 bis 15 Gew.-% Titanoxid (C) umfasst; und
eine Beschichtungsschicht, die das Propylenpolymer (A) umfasst, laminiert auf beiden Oberflächen der Grundmaterialschicht.

3. Biaxial orientierte Multischicht-Polypropylenfolie gemäß Anspruch 1, umfassend:
eine biaxial orientierte Foliengrundmaterialschicht, erhältlich aus einer Propylenpolymerzusammensetzung, die 70 bis 95 Gew.-% eines Propylenpolymers (A),
3 bis 15 Gew.-% Calciumcarbonat (B) mit einer mittleren Partikelgröße von 1 bis 5 *µ*m, dessen Partikeloberfläche mit einer höheren Fettsäure oberflächenbehandelt ist, und
2 bis 15 Gew.-% Titanoxid (C) umfasst,
eine Beschichtungsschicht, die das Propylenpolymer (A) umfasst, laminiert auf eine Oberfläche der Grundmaterialschicht; und
eine Wärme-versiegelbare Schicht, die ein statistisches Propylen/α-Olefin-Copolymer (D) umfasst, laminiert auf die andere Oberfläche der Grundmaterialschicht.

4. Biaxial orientierte Multischicht-Polypropylenfolie gemäß irgendeinem der Ansprüche 1 bis 3, worin das Calciumcarbonat (B) einen maximalen Partikeldurchmesser von nicht mehr als 10 *µ*m aufweist und der Anteil der Partikel mit einem Partikeldurchmesser von nicht mehr als 5 *µ*m nicht weniger als 80 Gew.-% beträgt.

5. Biaxial orientierte Multischicht-Polypropylenfolie gemäß irgendeinem der Ansprüche 1 bis 3, worin das Titanoxid (C) mit Aluminiumoxid oberflächenbehandelt ist.

6. Biaxial orientierte Multischicht-Polypropylenfolie gemäß irgendeinem der Ansprüche 1 bis 3, worin das Propylenpolymer (A) ein Propylen-Homopolymer ist.

7. Biaxial orientierte Multischicht-Polypropylenfolie gemäß irgendeinem der Ansprüche 1 bis 3, worin die biaxial orientierte Foliengrundmaterialschicht und die Beschichtungsschicht, oder die biaxial orientierte Foliengrundmaterialschicht, die Beschichtungsschicht und die Wärme-versiegelbare Schicht durch Co-Extrusion geformt sind.

8. Biaxial orientierte Multischicht-Polypropylenfolie gemäß irgendeinem der Ansprüche 1 bis 3, worin das statistische Propylen/α-Olefincopolymer (D) ein statistisches 1-Buten/Propylen-Copolymer (E) umfasst.

9. Aufkleber-Grundmaterial, umfassend die biaxial orientierte Multischicht-Polypropylenfolie gemäß irgendeinem der Ansprüche 1 bis 8.

## Revendications

1. Film multi-couche orienté biaxialement en polypropylène comprenant :
une couche de matériau de base de film orienté biaxialement que l'on peut obtenir à partir d'une composition de polymère de propylène qui comprend
70 à 95 % en poids d'un polymère de propylène (A),
3 à 15 % en poids d'un carbonate de calcium (B) ayant un diamètre moyen de particule de 1 à 5 µm, la surface des particules étant traitée à l'aide d'un acide gras supérieur, et
2 à 15 % en poids d'un oxyde de titane (C) ;
une couche de revêtement comprenant le polymère de propylène (A) laminé sur une surface de la couche de matériau de base ; et
une couche de revêtement comprenant le polymère de propylène (A)ou une couche thermoscellable comprenant un copolymère (D) statistique propylène/α-oléfine, laminée sur l'autre surface de la couche du matériau de base.

2. Film multicouche orienté biaxialement en polypropylène selon la revendication 1, comprenant :
une couche de matériau de base de film orienté biaxialement que l'on peut obtenir à partir d'une composition de polymère de propylène qui comprend
70 à 95 % en poids d'un polymère de propylène (A),
3 à 15 % en poids d'un carbonate de calcium (B) ayant un diamètre moyen de particules de 1 à 5 µm, la surface des particules étant traitée à l'aide d'un acide gras supérieur, et
2 à 15 % en poids d'un oxyde de titane (C) ; et
une couche revêtement comprenant le polymère de propylène (A) laminé sur les deux surfaces de la couche de matériau de base.

3. Film multicouche orienté biaxialement en polypropylène selon la revendication 1, comprenant :
une couche de matériau de base de film orienté biaxialement que l'on peut obtenir à partir d'une composition de polymère de propylène, qui comprend
70 à 95 % en poids d'un polymère de propylène (A),
3 à 15 % en poids d'un carbonate de calcium (B) ayant un diamètre moyen de particules de 1 à 5 µm, la surface des particules étant traitée à l'aide d'un acide gras supérieur, et
2 à 15 % en poids d'un oxyde de titane (C);
une couche revêtement comprenant le polymère de propylène (A) laminé sur une surface de la couche de matériau de base ; et
une couche thermoscellable comprenant un copolymère (D) statistique propylène/α-oléfine, laminée sur l'autre surface de la couche de matériau de base.

4. Film multicouche orienté biaxialement en polypropylène selon l'une quelconque des revendications 1 à 3, dans lequel le carbonate de calcium (B) a un diamètre de particules maximum d'au plus 10 µm, et une proportion d'au moins 80 % en poids de particules ayant un diamètre d'au plus 5 µm.

5. Film multicouche orienté biaxialement en polypropylène selon l'une quelconque des revendications 1 à 3, dans lequel l'oxyde de titane (C) est traité en surface avec de l'alumine.

6. Film multicouche orienté biaxialement en polypropylène selon l'une quelconque des revendications 1 à 3, dans lequel le polymère de propylène (A) est un homopolymère de propylène.

7. Film multicouche orienté biaxialement en polypropylène selon l'une quelconque des revendications 1 à 3, dans lequel la couche de matériau de base de film orienté biaxialement et la couche de revêtement ou la couche de matériau de base de film orienté biaxialement, la couche de revêtement et la couche thermo-scellable sont moulées avec coextrusion.

8. Film multicouche orienté biaxialement en polypropylène selon l'une quelconque des revendications 1 à 3, dans lequel le copolymère statistique (D) propylène/α-oéfine comprend un copolymère statistique (E) 1-butène/propylène.

9. Matériau de base d'étiquette comprenant le film multicouche orienté biaxialement en polypropylène revendiqué dans l'une quelconque des revendications 1 à 8.
